# EUROPEAN PATENT SPECIFICATION

(11) **EP 1 739 964 B1**
(45) Date of publication and mention of the grant of the patent: **20.10.2010**
(21) Application number: 06013231.3
(22) Date of filing: 27.06.2006
(51) Int. Cl.: H04N 5/765, H04N 5/445

(54) **Label creating apparatus and label creating program stored in computer-readable recording medium**
Etikettenherstellungsvorrichtung und auf einem computerlesbaren Speichermedium gespeichertes Etikettenherstellungsprogramm
Appareil de création des etiquettes et logiciel de création des etiquettes enregistré sur un support d'enregistrement lisible par un ordinateur

(30) Priority: 27.06.2005 JP 2005185936
(43) Date of publication of application: 03.01.2007
(73) Proprietor: Brother Kogyo Kabushiki Kaisha, Nagoya-shi, Aichi-ken 467-8561 (JP)
(72) Inventor: Kato, Takao, Nagoya-shi Aichi-ken 467-8562 (JP); Ueno, Hideo, Nagoya-shi Aichi-ken 467-8562 (JP); Ishida, Minako, Nagoya-shi Aichi-ken 467-8562 (JP); Muto, Naruhito, Nagoya-shi Aichi-ken 467-8562 (JP)
(74) Representative: Hofer, Dorothea

(56) References cited:
- JP-A- 2003 134 447
- US-A1- 2002 051 160

## Description

This application claims priority from Japanese patent application serial number 2005-185936, filed June 27, 2005.

### BACKGROUND OF THE INVENTION

Field of the Invention

The present invention relates to a label creating apparatus and a label creating program stored in a computer-readable recording medium.

Description of the Related Art

Recently a hard disk recorder and a DVD recorder have been widely used, to further facilitate video-recording a broadcast program and viewing it. In video-recording a program, it is possible to receive information of the program to be video-recorded by utilizing an electronic program guide (EPG) and program it. Such an EPG is transmitted and provided on the Internet by using the same communication link as that for a broadcast program. In recent years, a personal computer equipped with a TV tuner has been used frequently, so that more and more people receive TV programs and video-record them by a personal computer connected to the Internet.

However, as video-recording is made much easier than ever in such a manner, video-recorded information accumulates and it becomes difficult to locate a desired video-recorded program afterward unless it is known which one of recording media has recorded which one of the programs, thus resulting in inconvenience. To solve this problem, a label creating (generating) apparatus is proposed for printing a label when an event such as video-recording programming or playback has occurred and applying it to a video-recording medium (see Japanese Patent Application Laid Open Publication No. 2003-134447, for example).

By the above-described conventional label creating apparatus, a template of labels that match recording media such as a VHS tape or an 8-millimeter tape is prepared and program information received from a program table such as an EPG is loaded into this template, to create a label. Then, a label created at a specified time (at the programmed time of video-recording, video-recording termination, playback, etc.) is printed.

However, this conventional apparatus is not compatible with a case where it is desired to create a label about a plurality of programs by referencing and summarizing program information after video-recording has completed. In particular, in a case where it is desired to video-record a series of programs such as a serial drama program and create a label for that, there is no way for an operator other than doing so by hand.

### SUMMARY OF THE INVENTION

It is an object of the present invention to provide a label creating apparatus for creating a label for video-recorded information based on accumulated program information and a label creating program stored in a computer-readable recording medium.

According to a first aspect, a label creating apparatus comprises a receiving device that receives program information, which is information relating to broadcast programs, a program information storing device that stores the program information received by this receiving device, a video-recording device that video-records the broadcast programs, a controller that associates, with each other, the video-recorded information of the broadcast program video-recorded by this video-recording device and the program information of this broadcast program stored in the program information storing device, searches the program information stored in the program information storing device for such program information as to have been associated with the video-recorded information, specifies the broadcast program for which a label is to be created, from among the broadcast programs that correspond to the program information stored in the program information storing device, and receives the program information about the specified broadcast program from the program information storing device, and a label creating device that creates the label by arranging the program information received by this controller in a print region, in which if the program information associated with the video-recorded information is found, the controller specifies the broadcast information for which a label is to be created, from the broadcast programs that correspond to this associated program information.

In the label creating apparatus, program information, for example, EPG data etc., received by the receiving device is stored in the program information storing device, so that if a broadcast program is video-recorded by the video-recording device, the relevant video-recorded information is associated with the stored program information. Then, a broadcast program for which a label is to be created is specified by a controller from among the stored broadcast program information pieces, to create the label by using the program information. Further, if associated program information is found by the controller, information of a program for which a label is to be created is specified from among the associated program information pieces. In such a manner, program information is accumulated in the program information storing device and managed in a condition where it is associated with video-recorded information, so that it is possible to easily create labels collectively at any time including handling of video-recorded information manipulation such as video-recording programming, video-recording, and playback.

In the label creating apparatus, the program information is comprised of a plurality of items including at least a title of the broadcast program, so that the label creating device may create a label by arranging at least some of items of the program information into a print region. In such a manner, since program information is comprised of a plurality of items including at least a title of a broadcast program, it is possible to create a label by selecting arbitrary information from among the program information pieces such as a title, a subtitle, a performer, a broadcast day, and a broadcast time, for example.

In the label creating apparatus, the controller may detect whether a video-recording medium in which broadcast programs are video-recorded is provided and, if the video-recording medium is detected, search for program information associated with the video-recorded information recorded in this video-recording medium. In such a manner, if a video-recording medium such as a DVD is detected, it is probably desired to create a label for a program video-recorded in that medium, so that program information associated with video-recorded information stored in that medium can be received from the program information storing device to create the label. By thus associating, it is possible to receive target program information more quickly than the case of searching the mass-capacity program information storing device for the relevant program information, thereby creating a label quickly.

In the label creating apparatus, the controller may record video-recorded information of a broadcast program video-recorded by the video-recording device and program information associated with this video-recorded information in a video-recording medium and, if a video-recording medium is detected, prior to searching the program information storing device, search program information recorded in this video-recording medium for such a program information piece as to have been associated with the video-recorded information. In such a manner, by recording also on the side of the video-recording medium video-recorded information and the corresponding program information in a condition where they are associated with each other, it is possible to receive necessary program information without searching the program information storing device only by inserting the video-recording medium, thereby quickly going to a step of creation of a label. Further, by storing program information in a video-recording medium beforehand, it is possible to create a label even by inserting the video-recording medium into hardware not equipped with the program information storing device.

In the label creating apparatus, if program information associated with the video-recorded information is not found, the controller may cross-check this video-recorded information and the program information stored in the program information storing device with each other, extract program information determined to correspond to the video-recorded information, and specify a broadcast program for which a label is to be created from among those broadcast programs that correspond to the extracted program information. In such a manner, even if no associated data is present in video-recorded information because, for example, nothing has been video-recorded in the same label creating apparatus, matching with EPG data from such information as a title or a video-recording time can be performed to create a label.

In the label creating apparatus, the controller may program video-recording of a broadcast program by the video-recording device and specify the programmed broadcast program as a broadcast program for which the label is to be created. It is thus possible to create a label simultaneously with video-recording programming.

The label creating apparatus further comprises a template storing device that stores arrangement information used to arrange the program information in a label print region and a template that serves as a print format including modification information of the program information to be arranged, in which the controller may select the template to be used from the plurality of templates stored in the template storing device and determine whether a specified plurality of broadcast programs constitutes a program series, the template storing device may include the program series-adapted template, the controller may select the program series-adapted template if the programs are determined to constitute a program series, and the label creating device may arrange the program information about the plurality of broadcast programs in a print region according to the program series-adapted template if this template is selected by the controller. In such a manner, when creating labels of a program series such as a serial drama, it is possible to create labels excellent in appearance for a plurality of video-recorded information pieces at a time by using a dedicated template, thus avoiding waste.

In the label creating apparatus, the controller may extract common information, which is program information common to all of a plurality of broadcast programs determined to constitute a program series, from program information of this plurality of broadcast programs and extract unique information, which is program information unique to each of the broadcast programs except the extracted common information, the program series-adapted template includes a common information object to insert the common information therein and a unique information object to insert the unique information therein, and the label creating device may arrange the common information extracted by the controller into the common information object and the unique information for each of the broadcast programs into the unique information object according to the program series-adapted template. In such a manner, on the series label template, for example, information common to all times of broadcasting such as a title of the programs is arranged into one common information object and information unique to each time of broadcasting such as a subtitle or a broadcast day is arranged into the respective unique information object. It is thus possible to obtain a label well suitable for a program series without duplicating the information with undue complication.

In the label creating apparatus, the controller may extract information about an item, if any, that has partially common information from program information about a plurality of broadcast programs determined to constitute a program series, the program series-adapted template includes a partially common information object to insert therein the partially common information, which is information extracted by the controller, and the label creating device may arrange the partially common information extracted by the controller into the partially common information object according to the program series-adapted template and avoid arranging the remaining information about the item whose partially common information has been extracted by the controller. In such a manner, if there are both information common to all times of broadcasting and information not common to them for a specific item such as a performer, for example, by picking up only the common information and arranging it on a program series-adapted label, a space of the label can be utilized effectively, resulting in the attractive label.

In the label creating apparatus, the controller may edit a label created by the label creating device and register, as a template, a print format including label arrangement information and modification information of the edited label in the template storing device. In such a manner, once a label is created according to a template, the label can be edited by the operator to register a result of the editing as a template so that a preferred print format can be used from the next time onward, thereby making it possible to create a preferred label in a labor saving manner.

According to a second aspect, a method of creating a label is provided which uses a label creating program stored in a computer-readable recording medium which comprises a receiving step of receiving program information, which is information relating to broadcast programs, a program information storing step of storing the program information received in this receiving step, a video-recording step of video-recording the broadcast programs, an associating step of associating, with each other, the video-recorded information of the broadcast program video-recorded in this video-recording step and the program information of this broadcast program stored in the program information storing step, a searching step of searching the program information stored in the program information storing step for such program information as to have been associated with the video-recorded information, a program specifying step of specifying the broadcast program for which a label is to be created, from among the broadcast programs that correspond to the program information stored in the program information storing step, a program information receiving step of receiving the program information about the broadcast program specified in this program specifying step, from the program information stored in the program information storing step, and a label creating step of creating the label by arranging the program information received in this program information receiving step in a print region, in which if the program information associated with the video-recorded information is found in the searching step, the program specifying step specifies a broadcast program for which a label is to be created, from among the broadcast programs that correspond to this associated program information.

In a label creating program, program information, for example, EPG data etc., received in a receiving step is stored in a program information storing step, so that if a broadcast program is video-recorded in a video-recording step, the relevant video-recorded information and the stored program information are associated with each other in an associating step. Then, a broadcast program for which a label is to be created is specified in a program specifying step from among the stored video-recorded information pieces, to create the label by using the program information. Further, if associated program information is found in a searching step, information of a program for which a label is to be created is specified from among the associated program information pieces. In such a manner, program information is accumulated in the program information storing step and managed in a condition where it is associated with video-recorded information, so that it is possible to easily create labels collectively at any time including handling of video-recorded information manipulation such as video-recording programming, video-recording, and playback.

In the label creating program, the program information is comprised of a plurality of items including at least a title of the broadcast program, so that in the label creating step, a label may be created by arranging at least some of items of the program information into a print region. In such a manner, since program information is comprised of a plurality of items including at least a title of a broadcast program, it is possible to create a label by selecting arbitrary information from among the program information pieces such as a title, a subtitle, a performer, a broadcast day, and a broadcast time, for example.

The label creating program further comprises a detecting step, in which it is detected whether the video-recording medium is provided, and in the detecting step, program information may be searched for a program information which is associated with the video-recorded information recorded in this video-recording medium. In such a manner, if a video-recording medium such as a DVD is detected, it is probably desired to create a label for a program video-recorded in that medium, so that program information associated with video-recorded information stored in that medium can be received to create the label. By thus associating, it is possible to receive target program information more quickly than the case of searching all of the information stored in the program information storing step for the relevant program information, thereby creating a label quickly.

The label creating program further comprises a medium recording step of recording video-recorded information of a broadcast program video-recorded in the video-recording step and program information associated with this video-recorded information in the associating step in a video-recording medium, in which if a video-recording medium is detected in the detecting step, prior to searching in the program information storing step, the searching step may search program information recorded in this video-recording medium for such a program information piece as to have been associated with the video-recorded information. In such a manner, by recording also on the side of the video-recording medium video-recorded information and the corresponding program information in a condition where they are associated with each other, it is possible to receive necessary program information only by inserting the video-recording medium, thereby quickly going to a step of creation of a label.

The label creating program further comprises a cross-checking step of, if program information associated with the video-recorded information is not found in the searching step, cross-checking this video-recorded information and the program information stored in the program information storing step with each other and an extracting step of extracting program information determined to correspond to the video-recorded information in the cross-checking step, in which in the program specifying step, a broadcast program for which a label is to be created may be specified from among the broadcast programs that correspond to the program information extracted in this extracting step. In such a manner, even if no associated data is present in video-recorded information because, for example, nothing has been video-recorded, matching with EPG data from such information as a title or a video-recording time can be performed to create a label.

The label creating program further comprises a video-recording programming step of programming video-recording of a broadcast program in the video-recording step, in which in the program specifying step, a broadcast program programmed in this video-recording programming step may be specified as a broadcast program for which the label is to be created. It is thus possible to create a label simultaneously with video-recording programming.

The label creating program further comprises a template selecting step of selecting a template to be used from among a plurality of templates that constitutes a print format including arrangement information used to arrange the program information in a label print region and modification information of the arrangement information which is arranged and a program series determining step of determining whether a plurality of broadcast programs specified in the program specifying step constitutes a program series, in which if the programs are determined to constitute a program series in the program series determining step, a program series-adapted template may be selected in the template selecting step, and if the program series-adapted template is selected in the template selecting step, program information about the plurality of broadcast programs may be arranged in the print region according to this program series-adapted template in the label creating step. In such a manner, when creating labels of a program series such as a serial drama, it is possible to create labels excellent in appearance for a plurality of video-recorded information pieces at a time by using a dedicated template, thus avoiding waste.

The label creating program further comprises a common information extracting step of extracting common information, which is program information common to all of a plurality of broadcast programs determined in the program series determining step to constitute a program series, from program information of this plurality of broadcast programs and a unique information extracting step of extracting unique information, which is program information unique to each of the broadcast programs except the common information extracted in this common information extracting step, in which the program series-adapted template includes a common information object to insert the common information therein and a unique information object to insert the unique information therein and the label creating step may arrange the common information extracted in the common information extracting step into the common information object and the unique information for each of the broadcast programs into the unique information object according to the program series-adapted template. In such a manner, on the program series label template, for example, information common to all times of broadcasting such as a title of the programs is arranged into one common information object and information unique to each time of broadcasting such as a subtitle or a broadcast day is arranged into the respective unique information object. It is thus possible to obtain a label well suitable for a program series without duplicating the information in a complicated way.

The label creating program further comprises a partially common information extracting step of extracting information about an item, if any, that has partially common information from program information about a plurality of broadcast programs determined in the program series determining step to constitute a program series, in which the program series-adapted template includes a partially common information object to insert therein the partially common information, which is information extracted in the partially common information extracting step, and the label creating step may arrange the partially common information extracted in the partially common information extracting step into the partially common information object according to the program series-adapted template and avoid arranging the remaining information about the item whose partially common information has been extracted in the partially common information extracting step. In such a manner, if there are both information common to all times of broadcasting and information not common to them for a specific item such as a performer, for example, by picking up only the common information and arranging it on a program series-adapted label, a space of the label can be utilized effectively, resulting in the attractive label.

The label creating program may further comprise an editing step of editing a label created in the label creating step and a registering step of registering, as a template, a print format including label arrangement information and modification information of the label edited in this editing step. In such a manner, once a label is created according to a template, the label can be edited by the operator to register a result of the editing as a template so that a preferred print format can be used from the next time onward, thereby making it possible to create a preferred label in a labor saving manner.

### BRIEF DESCRIPTION OF THE DRAWINGS

FIG. 1 is a block diagram of an electric configuration of a label creating apparatus;

FIG. 2 is a flowchart of an overall flow of label creating processing;

FIG. 3 is a flowchart of video-recording programming processing which is performed during the label creating processing;

FIG. 4 is a flowchart of medium recording processing and video-recording processing;

FIG. 5 is a flowchart of "previously video-recorded" label creating processing which is performed during the label creating processing;

FIG. 6 is a flowchart of data manipulating/editing processing which is performed during the label creating processing;

FIG. 7 is a flowchart of program series-adapted label creating processing which is performed during the data manipulating/editing processing;

FIG. 8 is a flowchart of template applying processing which is performed during the program series-adapted label creating processing;

FIG. 9 is a flowchart of ordinary label creating processing which is performed during the data manipulating/editing processing;

FIG. 10 is an image of a list of information of programs to be selected;

FIG. 11 is an image of an example of a list of templates; and

FIG. 12 is an image of an example where the template is applied to selected programs.

### DESCRIPTION OF THE PREFERRED EMBODIMENTS

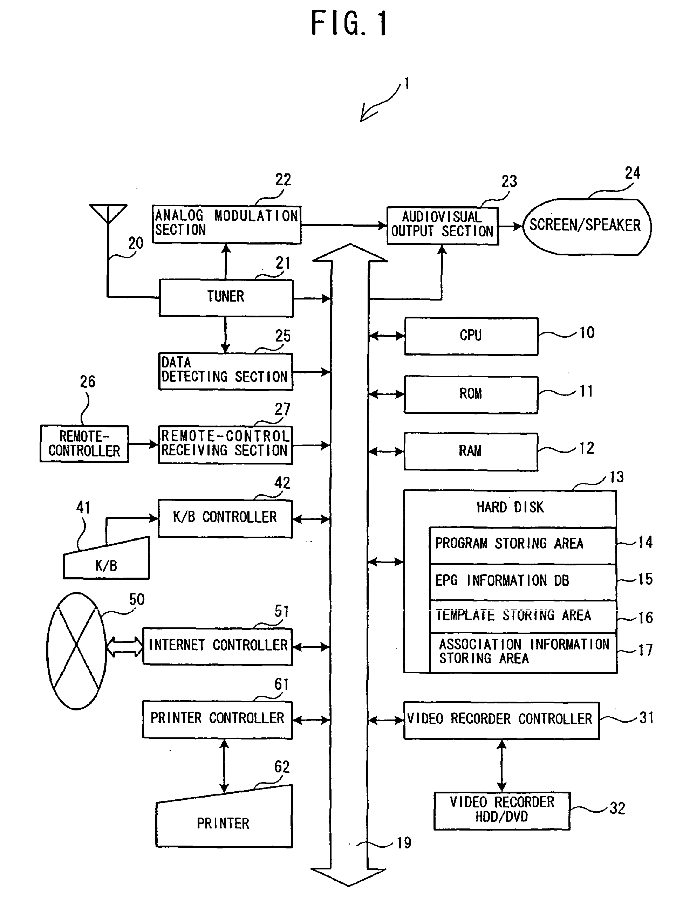

The following will describe embodiments with reference to drawings. In the following description, a personal computer connected to a printer is exemplified as a label creating apparatus 1. In this personal computer, a "label creating program" is installed. First, the label creating apparatus 1 is described with reference to FIG. 1.

As shown in FIG. 1, the label creating apparatus 1 is configured by connecting peripherals such as input/output devices to a personal computer, which is referred to as a so-called TV personal computer, equipped with a tuner for receiving a TV program. The label creating apparatus 1 includes a CPU 10 for controlling the personal computer. To this CPU 10, a ROM 11 in which programs such as a BIOS to be executed by the CPU 10 is stored, a RAM 12 in which data is stored temporarily, and a hard disk 13 for storing data are connected via a bus 19.

The hard disk 13 includes a program storing area 14, an EPG information database (DB) 15, a template storing area 16, an association information storing area 17, etc. It is to be noted that the program storing area 14 stores the label creating program and other various programs to be executed in the label creating apparatus 1. The EPG information database (DB) 15 accumulates program information. The template storing area 16 is an aggregate of templates (which is detailed later) in which information is stored beforehand as forms for printing including a size, a font, and arrangement of individual information piece to be printed in a print area. The association information storing area 17 stores an association between a video-recorded broadcast program data and program information in the EPG information DB 15.

A tuner 21 for receiving a TV program via an antenna 20 is connected to the CPU 10 via the bus 19. Broadcast data of a TV program received by the tuner 21 goes through an analog modulation section 22 and an audiovisual output section 23 and is output as an video and a speech at a monitor (screen)/speaker 24. In such a manner, video data and speech data received by the tuner 21 can be video-recorded in a hard disk (HDD) or a DVD by a video-recorder 32 connected via a video-recorder controller 31. The label creating apparatus 1 is configured so that it can be remote-controlled by a remote controller 26. A remote-control receiving section 27 for receiving a signal from this remote controller 26 is also connected to the CPU 10 via the bus 19. Further, a data detecting section 25 for detecting received broadcast data and outputting it to the CPU 10 is connected to the tuner 21.

Furthermore, a keyboard (K/B) controller 42, a printer controller 61, and an Internet controller 51 are connected to the CPU 10 via the bus 19. The keyboard (K/B) controller 42 is connected to a keyboard (K/B) 41 on which a user enters information, to control the entry. The printer controller 61 is connected to a printer 62 for printing a created label, to control the printing. The Internet controller 51 is provided to connect to the Internet 50.

In the present embodiment, EPG data that provides program information such as a title, a broadcast time, a channel, and a performer of a broadcast program is received from the Internet 50, manipulated, and accumulated in the EPG information DB 15 in the hard disk 13. The EPG information may not only be received from the Internet 50 but also received together with broadcast data from the tuner 21 and received.

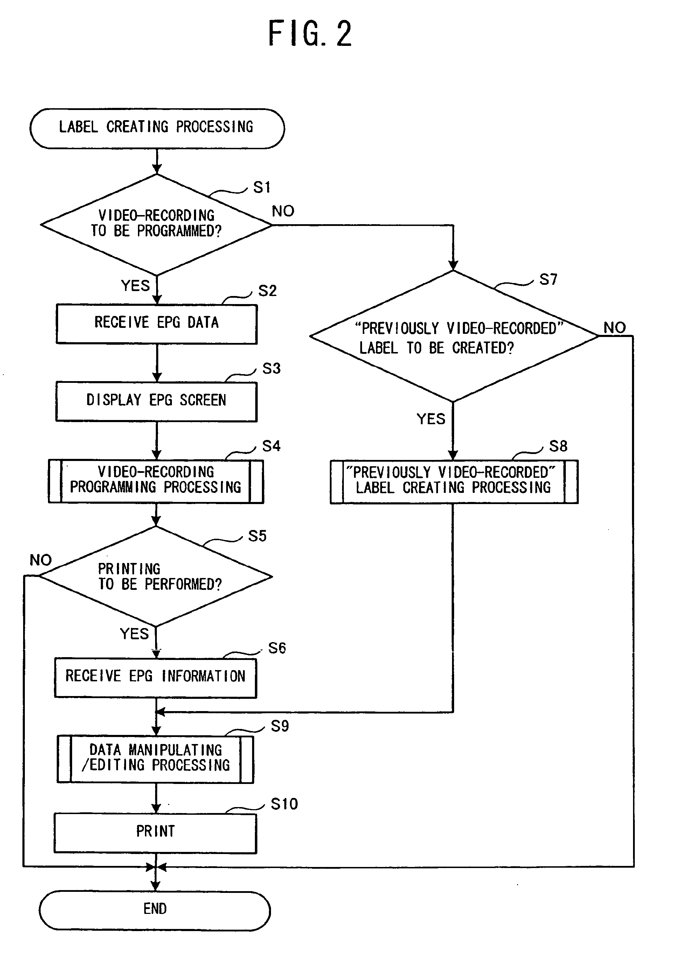

] Next, processing to be performed in the label creating apparatus 1 having the above-described configuration is described with reference to FIGS. 2 to 12.

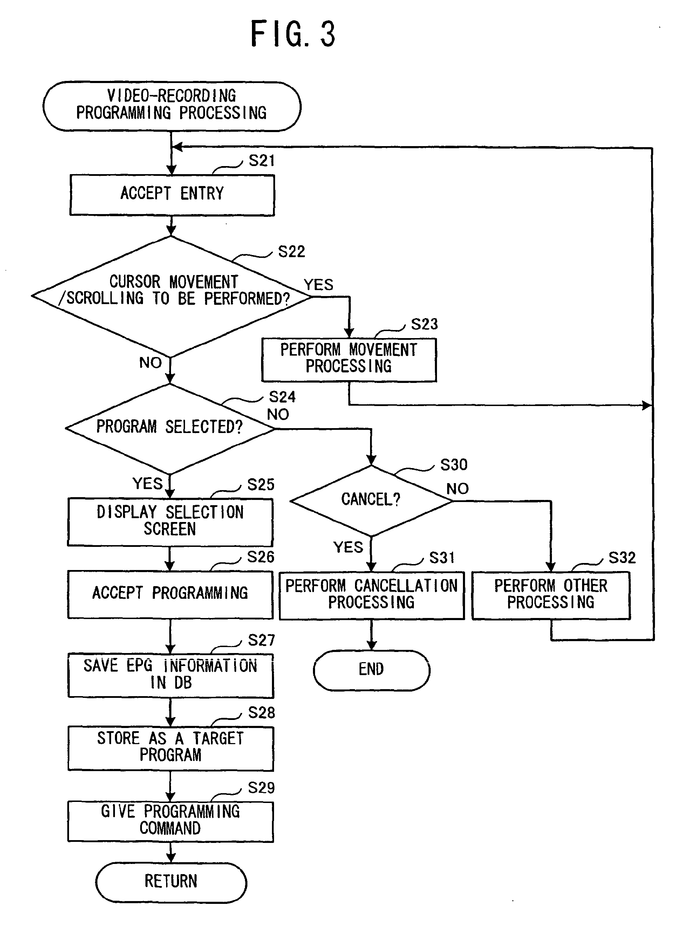

As shown in FIG. 2, when label creating processing is started, first the process determines whether to program video-recording (S1). If video-recording is to be programmed, (YES at S1), EPG data (i.e., iEPG data) is received from the Internet 50 (S2). This received EPG data is displayed on the screen (S3). When the EPG data is thus displayed, video-recording programming processing is performed which accumulates in the EPG information DB 15 the EPG data of a broadcast program whose video-recording programming has been accepted and which has been programmed to be video-recorded (S4). Details of the video-recording programming processing are described later with reference to FIG. 3.

When the video-recording programming processing is terminated, the process determines whether to immediately create a label of the program to be recorded and print it (S5). If a label is not to be created immediately (NO at S5), the label creating processing ends. If a label is to be created immediately for printing (YES at S5), the process receives the EPG information of the program to be recorded stored in the EPG information DB 15 by the video-recording programming processing (S6) and goes to S9.

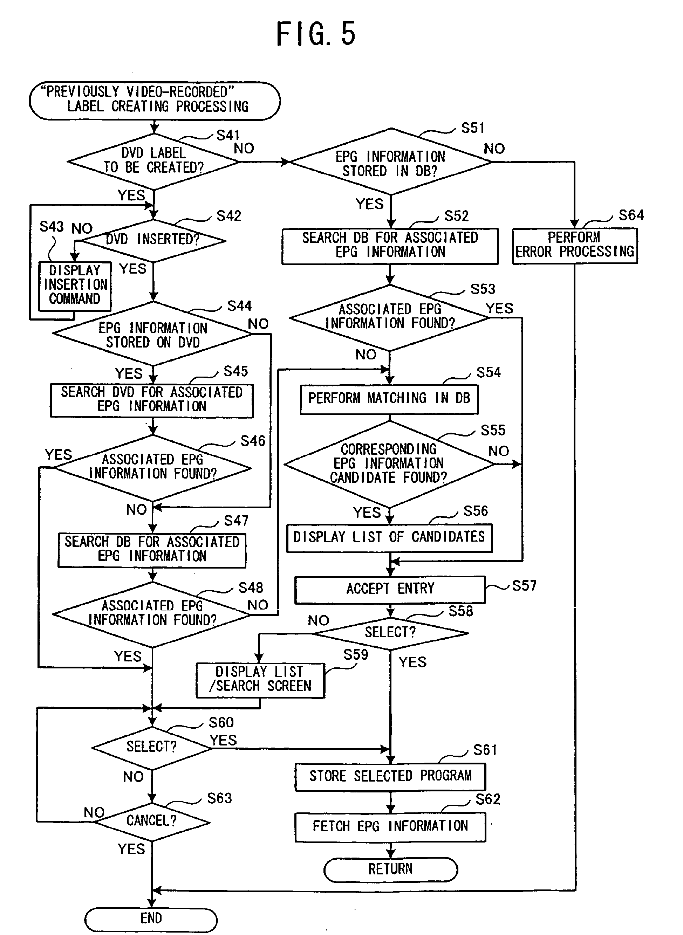

If video-recording is not to be programmed (NO at S1), the process determines whether to create a label for previously video-recorded data (S7). If it is not a label creation for previously video recorded data (NO at S7), the label creating processing ends. If a label for previously video-recorded data is to be created (YES at S7), the process performs "previously video-recorded" label creating processing for creating a label for previously video-recorded data by using the EPG information stored and accumulated in the EPG information DB 15 at the time of video-recording programming (S8). Details of the "previously video-recorded" label creating processing are described later with reference to FIG. 5.

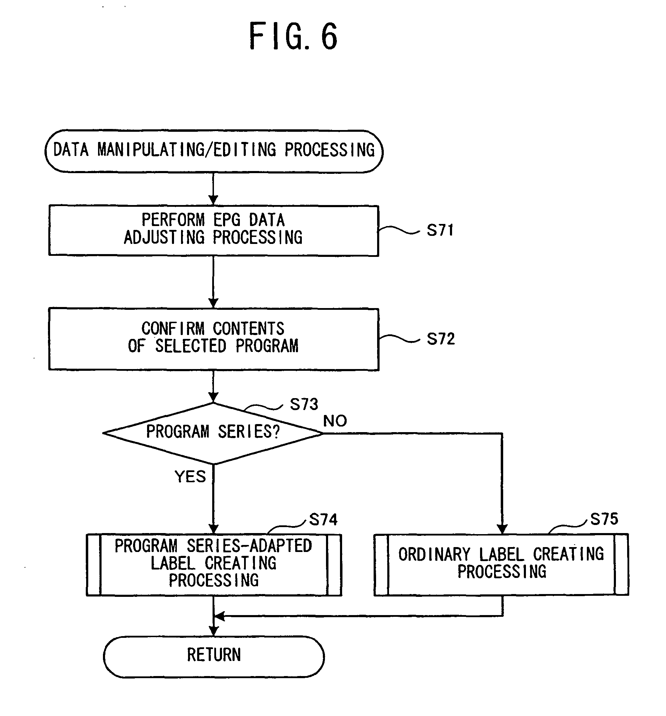

If a label of a program which has been programmed to be video-recorded is to be created immediately (YES at S5) and the EPG information of this program to be video-recorded has been received (S6) and if the EPG information to be used in creation of a "previously video-recorded" label has been extracted (S8), the process performs manipulation/editing processing on data subject to label creation. Then, the process arranges the data in a label print region (S9), performs print processing by using the printer based on this print data, and ends the processing (S10). Details of the data manipulation/editing processing are described later with reference to FIGS. 6 to 12.

Next, the video-recording programming processing is described with reference to FIG. 3. First, the process accepts an entry through the keyboard 41 or a mouse (not shown) by an operator when he is watching program information being displayed (S21). Subsequently, the process determines whether this entered commands for cursor movement or scrolling (S22). If the entered command is for cursor movement or scrolling (YES at S22), the process performs the corresponding movement (S23) and returns to the entry acceptance step (S21).

If the command is not for cursor movement or scrolling (NO at S22), the process determines whether entry of selection of a desired program to be programmed has been commanded (S24). If a program selection is commanded (YES at S24), a screen for selection is displayed (S25), to accept video-recording programming (S26). EPG information of the program to be video-recorded is added into the EPG information DB 15 and saved there (S27). In this case, a label can be created immediately for a program to be video-recorded, so that the program is temporarily stored in the RAM 12 as a target program for label creation (S28). Then, a video-recording programming command is transmitted to the video-recorder 32 (S29) and the process returns to the label creating processing of FIG. 2.

If a program selection is not commanded, on the other hand, (NO at S24), the process determines whether a cancellation command is received (S30). If a cancellation is commanded (YES at S30), the process performs cancellation processing (S31) and ends overall label creating processing. If cancellation is not commanded (NO at S30), the process performs other processing relating to video-recording programming (S32) and returns to the entry acceptance step of S21.

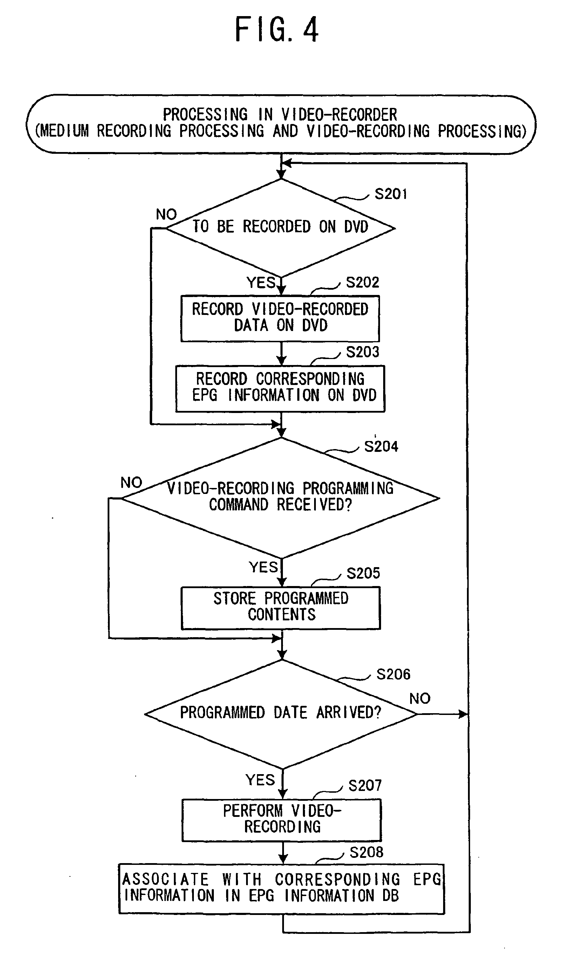

The following will describe, with reference to FIG. 4, video-recording processing by means of a video-recording programming command and medium recording processing to record, on a DVD, data that is video-recorded in a hard disk by a command entered by the operator, both of which are performed by the video-recorder 32. First, the process determines whether a command has been entered to record the video-recorded data on a DVD (S201). If video recording on a DVD is not commanded (NO at S201), the process goes directly to S204. If video recording on a DVD is commanded (YES at S201), the video-recorded data is recorded on the connected DVD (S202). EPG information concerned with this video-recorded data is read from the EPG information DB 15 and recorded on the DVD (S203). By thus recording EPG information on a DVD beforehand, it is possible to quickly receive the EPG information that corresponds to a label for a video-recorded program in the DVD when creating the label.

Next, the process determines whether a video-recording programming command has been received (S204). If no new video-recording programming command is received (NO at S204), the process goes directly to S206.

If a video-recording programming command is received (YES at S204), contents to be programmed are stored (S205) . Then, the process determines whether a date specified in the stored programming command has arrived (S206). If the specified date has not arrived (NO at S206), the process returns to S201. If the specified date has arrived (YES at S206), video-recording is performed in accordance with the relevant video-recording command (S207). Then, the process associates the video-recorded data with the corresponding EPG information in the EPG information DB 15 (S208) and returns to S201 to repeat the above processing. In this case, the video-recorded data and the EPG information are associated with each other by storing a table in which they are correlated with each other in the association information storing area 17. It is to be noted that as far as the video-recorded data and the EPG information are correlated with each other, such a configuration is acceptable that a flag that indicates the video-recorded data directly may be stored in the EPG information DB 15.

Next, the "previously video-recorded" label creating processing is described with reference to FIG. 5. First, the process determines whether it is commanded to create a label to be attached to a DVD (S41). If a label for a DVD is to be created (YES at S41), the process determines whether the DVD is inserted in a DVD drive (S42). If the DVD is not inserted (NO at S42), a command to insert the DVD appears on the screen (S43). Then, the process returns to S42 to detect insertion of the DVD again.

If insertion of the DVD is detected (YES at S42), the process determines whether the EPG information is stored on this DVD (S44). If the EPG information is stored on the DVD (YES at S44), the process searches the DVD for such EPG information as to have been associated with the video-recorded information (S45). The process determines whether the associated EPG information has been found as a result of search (S46). If the EPG information is found (YES at S46), the process goes directly to S60 to determine whether to select that EPG information as a program for which a label is to be created.

If the associated EPG information has not been found (NO at S46) or no EPG information is stored on the DVD (NO at S44), the process searches the EPG information DB 15 for the EPG information associated with the video-recorded information (S47). Then, the process determines whether the associated EPG information has been found as a result of search of the EPG information DB 15 (S48). If the EPG information associated is found (YES at S48), the process determines whether to select that EPG information as a program for which a label is to be created (S60). If the EPG information is selected as a program to be printed on a label at S60 (YES at S60), the process stores that program in the RAM 12 as a selected program (S61) and fetches the EPG information of this program from the EPG information DB 15 (S62). Then, the process returns to the label creating processing of FIG. 2. In this case, it is possible to select a plurality of programs for label creation and thus to create a plurality of labels of a same print format at a time for each of the programs.

If no EPG information associated with the video-recorded information in the DVD has been found in the EPG information DB 15 (NO at S48), the process searches the EPG information DB 15 for the EPG information considered to correspond to the video-recorded information (S54). For example, there is a high possibility of finding the corresponding EPG information based on matching by use of item information such as a title, a broadcast time, or a channel. The process determines whether candidates of the corresponding EPG information have been found as a result of matching (S55). If candidates of corresponding EPG information are found (YES at S55), the process displays a list of these candidates (S56) and accepts an entry of the operator's decision on whether they correspond to the video-recorded information (S57). Then, the process determines whether to select the EPG information as a program for which a label is to be created (S58). If any EPG information is selected from among the candidates through the accepted entry (YES at S58), the process stores the relevant program in the RAM 12 as a selected program (S61) and fetches the EPG information of this program from the EPG information DB 15 (S62). Then, the process returns to the label creating processing of FIG. 2.

If no EPG information is selected from candidates (NO at S58), it means that there is no corresponding EPG information among the candidates, so that a list display/search screen appears so that the operator can arbitrarily search the DB for the corresponding EPG information and select it (S59). The process waits for the operator selecting the EPG information and, if selection has been made (YES at S60), stores the relevant program in the RAM 12 as a selected program (S61) and fetches the EPG information of this program from the EPG information DB 15 (S62). Then, the process returns to the label creating processing of FIG. 2. In this case also, it is possible to select a plurality of programs for label creation and thus to create a plurality of labels of a same print format at a time for each of the programs.

If no EPG information is selected by the operator (NO at S60), the process determines whether a cancellation command is received (S63). If cancellation has been commanded (YES at S63), the process ends the label creating processing. If cancellation is not commanded (NO at S63), the process returns to S60 to wait for selection of the EPG information.

On the other hand, if it is not commanded to create a label to be attached to a DVD (NO at S41), the process determines whether the EPG information is stored in the EPG information DB 15 (S51). If no EPG information is not stored in the EPG information DB 15 (NO at S51), the label cannot be created, so that the process performs error processing (S64) and ends the overall processing.

If EPG information is stored in the EPG information DB 15 (YES at S51), the process searches the EPG information DB 15 for the EPG information associated with the video-recorded information (S52). Then, the process determines whether the associated EPG information has been found as a result of searching of the EPG information DB 15 (S53). If the associated EPG information is found (YES at S53), the process goes to S57 to accept an entry by the operator. The process determines whether, as a result, the EPG information has been selected as a program for which a label is to be created (S58). If any EPG information has been selected from among candidates through the accepted entry (YES at S58), the process stores the relevant program in the RAM 12 as a selected program (S61) and fetches the EPG information of this program from the EPG information DB 15 (S62). Then, the process returns to the label creating processing of FIG. 2.

If no EPG information associated with the video-recorded information in the DVD has been found in the EPG information DB 15 (NO at S53), the process searches the EPG information DB 15 for the EPG information considered to correspond to the video-recorded information (S54). For example, there is a high possibility of finding the corresponding EPG information based on matching by use of item information such as a title, a broadcast time, or a channel. The process determines whether candidates of the corresponding EPG information have been found as a result of matching (S55). If candidates of corresponding EPG information are found (YES at S55), the process displays a list of these candidates (S56) and accepts an entry of the operator's decision on whether they correspond to the video-recorded information (S57). If any EPG information is selected from among the candidates through the accepted entry (YES at S58), the process stores the relevant program in the RAM 12 as a selected program (S61) and fetches the EPG information of this program from the EPG information DB 15 (S62). Then, the process returns to the label creating processing of FIG. 2.

If no EPG information is selected from the candidates (NO at S58), it means that there is no corresponding EPG information among the candidates, so that a list display/search screen appears so that the operator can arbitrarily search the DB for the corresponding EPG information and select it (S59). The process waits for the operator selecting the EPG information. If selection has been made (YES at S60), the process stores the relevant program in the RAM 12 as a selected program (S61) and fetches the EPG information of this program from the EPG information DB 15 (S62). Then, the process returns to the label creating processing of FIG. 2. In this case also, it is possible to select a plurality of programs for label creation and thus to create a plurality of labels of a same print format at a time for each of the programs.

If no EPG information is selected by the operator (NO at S60), the process determines whether a cancellation command is received (S63). If a cancellation has been commanded (YES at S63), the process performs ends the label creating processing. If cancellation is not commanded (NO at S63), the process returns to S60 to wait for selection of the EPG information by the operator.

Next, the data manipulating/editing processing which is executed during the label creating processing is described with reference to FIG. 6. In the data manipulating/editing processing, first the EPG information received from the EPG information DB 15 for a program previously selected as a target for which a label is to be created is converted into a format that facilitates internal processing (S71). For example, data adjustment is performed so that EPG information received as text data may be converted into a tabular form. Next, the process confirms contents of the EPG information of the program selected as a target for which a label is to be created (S72). The process determines whether, as a result of the confirmation, a plurality of programs has been selected and they constitute a program series such as a serial drama (S73). Whether the selected programs constitute a program series can be determined, for example, from such information as whether a title, a broadcast time, or a performer is common to them.

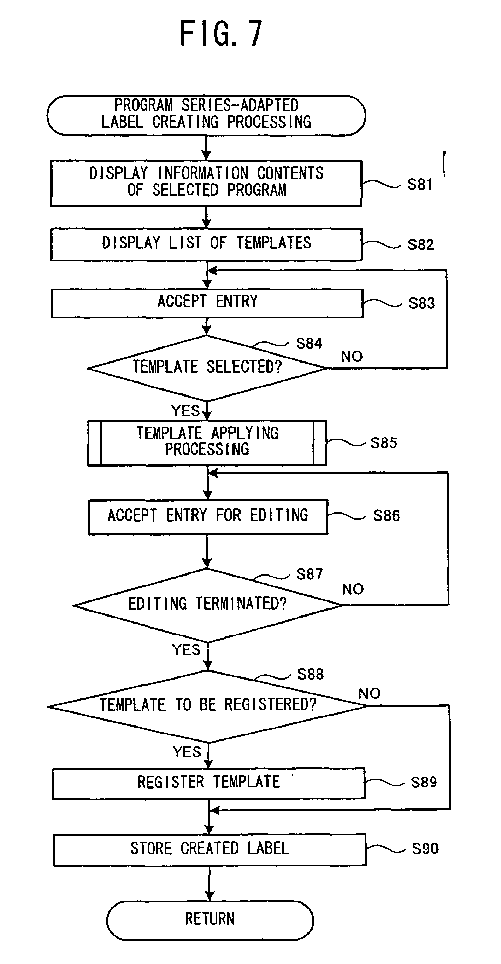

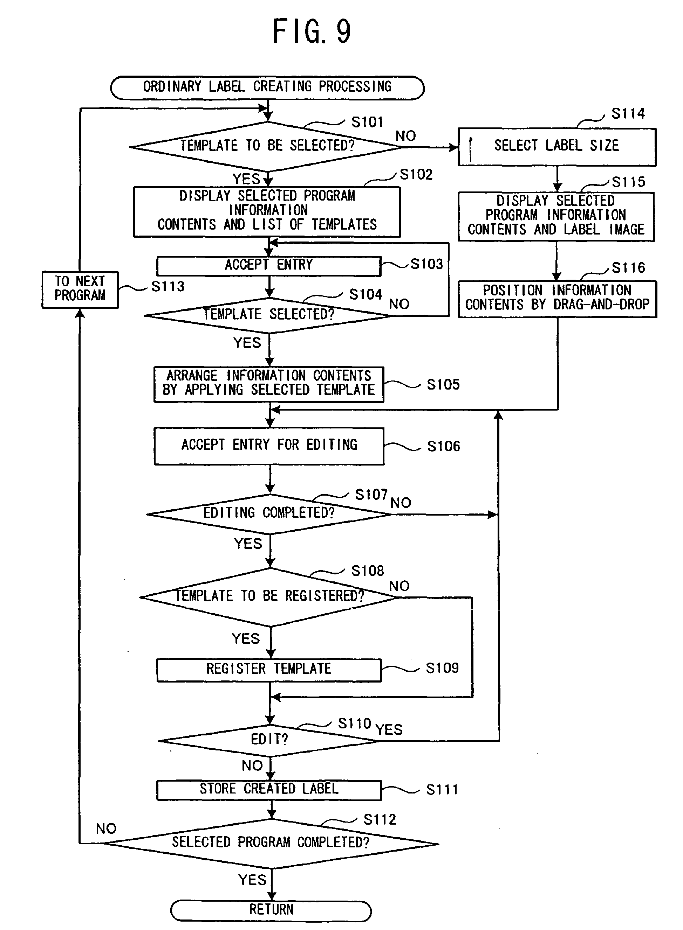

If the selected programs constitute a program series (YES at S73), the process performs program series-adapted label creating processing (S74) and returns to the label creating processing of FIG. 2. If the selected programs do not constitute a program series (NO at S73), the process performs ordinary label creating processing (S75) and returns to the label creating processing of FIG. 2. Details of the program series-adapted label creating processing are described later with reference to FIG. 7 and the ordinary label creating processing are described later with reference to FIG. 9.

Next, the program series-adapted label creating processing which is performed during the data manipulating/editing processing is described with reference to FIGS. 7, 10, and 11.

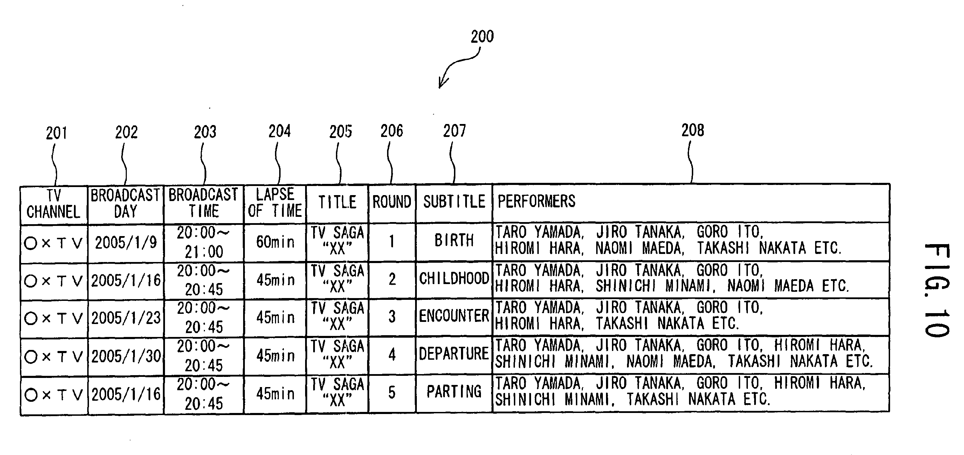

First, when the program series-adapted label creating processing starts, as shown in FIG. 10, a list of contents 200 of the EPG information of a selected program is displayed (S81). In this case, an example where a five-times share of a serial drama is selected is shown in FIG. 10. The received EPG information 200 includes information in each item of channel information 201, broadcast day information 202, broadcast time information 203, a video-recording time length information 204, title information 205, number-of-times information 206, subtitle information 207, and performer information 208. Because of a serial drama, contents of the title information 205 and the channel information 201 are common to all times of broadcasting. Further, contents of the performer information 208 are common to some of performers.

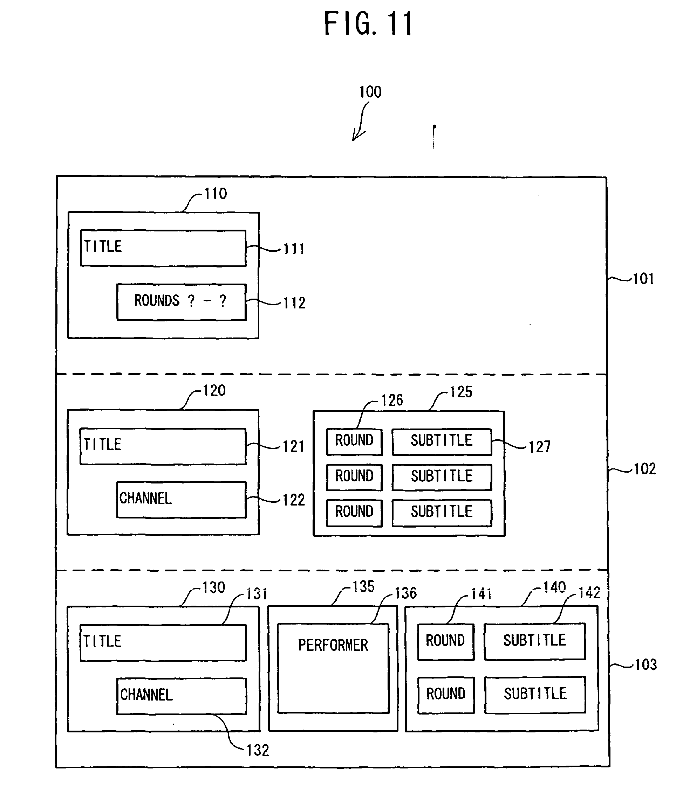

Next, the process reads a program series-adapted template from the template storing area 16 and displays a template list 100 as shown in FIG. 11 (S82). In this case, in an example shown in FIG. 11, three kinds of program series-adapted templates 101 to 103 are displayed in the template list 100. The template 101 is made of one label 110, in which a title object 111 and a number-of-times object 112 are arranged. Because of a program series, it can be used suitably, for example, in a case where it is desired to print only the common title information 205 and number-of-times information 206 on a label.

Further, the template 102 is made of two kinds of labels 120 and 125. In the label 120, a title object 121 and a channel object 122 can be arranged in such a condition that the title information 205 and the channel information 201 that are common to all times of broadcasting are inserted in them respectively. In the label 125, on the other hand, number-of-times objects 126 and subtitle objects 127 can be arranged as many as the number of selected programs. Further, the label 125 is created by arranging therein the number-of-times objects 126 and the subtitle objects 127 as many as a number that corresponds to the number of the selected programs. Therefore, in an example of FIG. 10, a five-times share of the program is listed, so that the two labels 125 are created and the number-of-times objects 126 and the subtitle objects 127 for the five-times share are arranged over these two labels.

Further, the template 103 is made of three kinds of labels 130, 135, and 140. As in the case of the label 120, in the label 130, a title object 131 and a channel object 132 can be arranged in such a condition that the time information 205 and the channel information 201 as information common to all times of broadcasting are inserted in them respectively. In the label 135, a performer object 136 is arranged for inserting in it only an extracted performer common to all times of broadcasting. As in the case of the label 125, in the label 140, number-of-times objects 141 and subtitle objects 142 can be arranged as many as a number that corresponds to the number of the selected programs. As in the case of the label 125, if they cannot be contained in one label, the number of labels to be created is increased so that the objects as many as a number of the selected programs may be arranged in them.

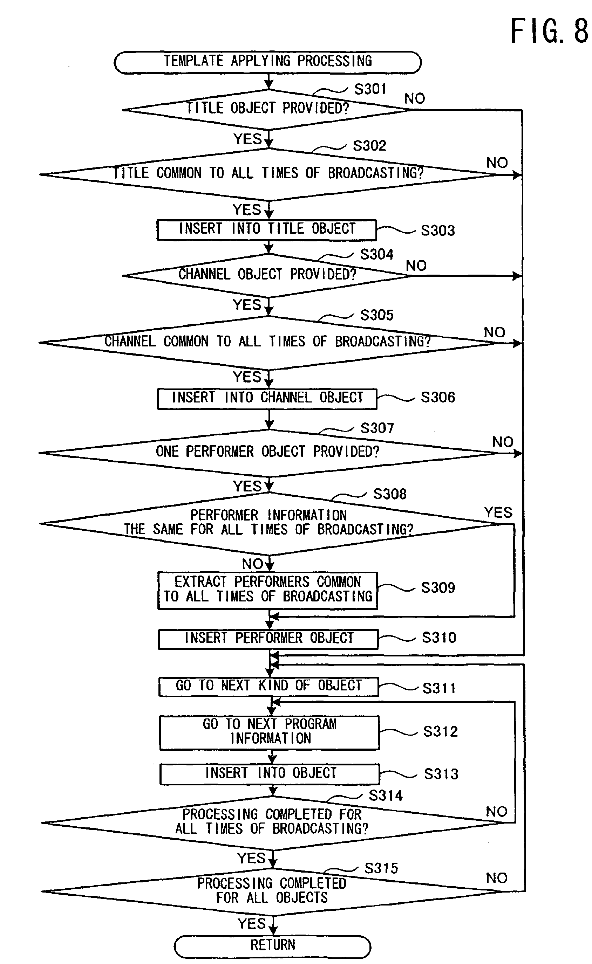

Next, as shown in FIG. 7 again, the process waits for the operator selecting any one of the templates from the template list as referencing the EPG information list and entering it (S83). If no template is selected yet (NO at S84), the process repeatedly accepts an entry (S83). If any one of the templates is selected (YES at S84), the process applies the selected template to the EPG information being selected, arranges its contents, and performs template applying processing for displaying a print image of a label (S85). Details of the template applying processing are described later with reference to FIG. 8.

Next, the process accepts an operator's entry for editing the print image after the template is applied (S86). The entry for editing is repeatedly accepted until the editing is terminated (NO at S87). If the editing ends (YES at S87), a query is made on whether to register a result of the editing as a template. If the result of the editing is to be registered as a template (YES at 88), the editing result is registered as a new program series-adapted template in the template storing area (S89). Print data of the label thus created in the processing above is stored in the RAM 12 (S90). Then, the process returns to the data manipulating/editing processing of FIG. 6. If the result of the editing is not to be registered as a template (NO at S88), the process stores the print data of the label in the RAM 12 (S90) and returns to the data manipulating/editing processing of FIG. 6.

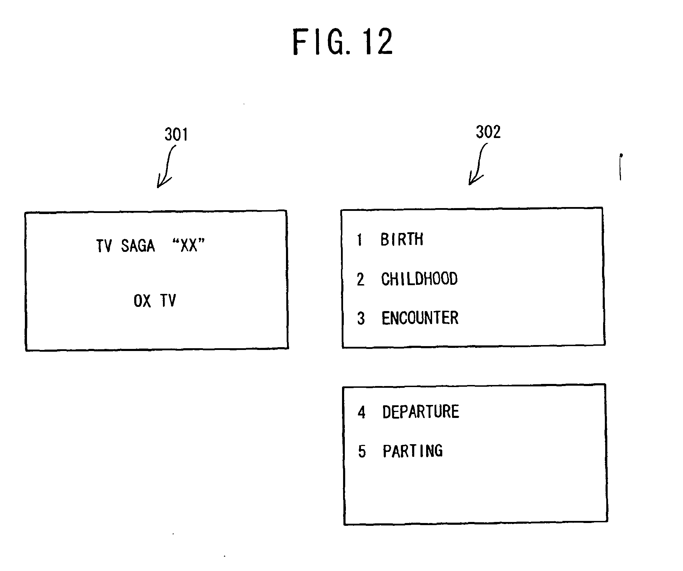

Next, the template applying processing which is performed during the program series-adapted label creating processing is described with reference to FIGS. 8 and 12. First, the process determines whether a selected template includes a title object in which a program title is to be inserted (S301). If no title object is included in the template (NO at S301), the process goes directly to S311.

If the selected template includes a title object (YES at S301), the process determines whether the title is common to all of the selected programs (for all times of broadcasting) (S302). Programs of a series such as a serial drama are considered to have a title common to them in many cases. If the title is not common to all of the times (NO at S302), the processing goes directly to S311. If the title is common to all of the times (YES at S302), the common title is inserted into the title object (S303).

Next, the process determines whether the channel object to insert therein a channel through which the program has been broadcast is included in the template (S304). If the channel object is not included in the template (NO at S304), the process goes directly to S311.

If the template includes a channel object (YES at S304), the process determines whether all of the selected programs (all times of broadcasting) share the same channel (S305). A program series such as a serial drama is considered to have the same channel ordinarily. If the channel is not common to all of the times (NO at S305), the process goes directly to S311. If the channel is common to all of the times (YES at S305), the common channel is inserted into the channel object (S306). It is to be noted that the title object and the channel object are provided to insert therein information common to all of the selected programs.

Next, the process determines whether only one performer object to insert therein information of a performer is included in the template (S307). Although the performers may be common to all times of broadcasting in sometimes, some of them may be common to each time of broadcasting in some cases and the others may be different over the times of broadcasting. Therefore, there may be prepared one template type for inserting into one object all the performers for each program series and the other template type for arranging therein the performers for each time of broadcasting. To insert all of the performers therein, the process would determine whether only one performer object is included in the template. If more than one performer object is included (NO at S307), the template is of such a type as not to perform processing to collect common performers, so that the process goes directly to S311.

If only one performer object is included (YES at S307), the process determines whether information of the performers for all times of broadcasting is the same (S308). If the performer information is the same for all times of the broadcasting (YES at S308), the performers are all inserted into the performer object (S310). If the performer information is not the same for all times of the broadcasting (NO at S308), only those performers common to all times of broadcasting are extracted (S309). These extracted performers are inserted into the performer object (S310). Such a template is prepared because often a serial drama etc. needs only main performers being written on a label.

With this, processing to arrange common information peculiar to a program series is completed, so that processing to insert information of each time of broadcasting is inserted for the remaining objects starts at S311. First, such kinds of objects that are not completed in insertion are made a target of the processing (S311). The process fetches information of items that correspond to a target object of the first selected program (S312) and inserts it into the target object (S313). Next, the process determines whether objects of such a kind as to be subject to the processing currently are completed in insertion for all of the selected programs (S314). If insertion is not complete (NO at S314), the process returns to S312 and moves to the next program information so that contents of the next program may be inserted into an object of the same kind (S313). In this case, if an empty object of the same kind is not arranged on the label yet, the process creates an object, inserts the information in it, and arranges it.

If the above processing is completed for all of the programs (YES at S314), the process determines whether the processing is completed for all of the kinds of objects (S315). If there are some kinds of objects that are not processed yet (NO at S315), the process returns to S311 to make the next kind of objects a target for the processing. Then, starting from the first program information (S312), information is inserted into that kind of objects (S313). This processing is repeated on all of the program information and all kinds of objects. If the processing is completed for all kinds of objects on the template (YES at S315), the process returns to FIG. 7.

For example, the template 102 of FIG. 11 is selected for program information of FIG. 10, when the above processing is completed, as a result a label 301 and a label 302 such as shown in FIG. 12 are created and displayed on the screen. It is to be noted that the label 301 is created by applying the label 120 of the template 102 and the label 302 is created by applying the label 125 of the template 102 and a five-times share of the selected program has been provided, so that they are created over the two labels.

Next, the ordinary label creating processing which is performed during the data manipulating/editing processing is described with reference to FIG. 9. First, the process determines whether to create a label by using a template (S101). This can be determined on whether the operator has entered a template selecting command. If a template is to be used (YES at S101), the process displays a list of templates that can be used together with contents of EPG information of a selected program (S102). Then the operator's entry for selection is accepted (S103). The entry for selection is repeatedly accepted (S103) until a template is selected (NO at S104) and If any one of the templates is selected (YES at S104), the process applies the selected template to arrange the information contents in the label print region (S105).

Next, the process accepts an entry by the operator for editing of the arranged label (S106). The templates are not fixed, so that even if any template is applied, the operator can edit the label arbitrarily. The process repeatedly accepts an entry (S106) until editing is completed (NO at S107). If editing is completed (YES at S107), the process determines whether to register the template so that modification information, arrangement information, etc. of a result of the editing can be used as a print format from the next printing onward (S108). A query can be made about whether to perform template registration by such a method as preparing an entry-adapted dialog box so that the operator can select it arbitrarily.

If the template is to be registered (YES at S108), the process registers the current state as the template by storing it in the template storing area 16 (S109). If the template is not to be registered (NO at S108), the process goes directly to S110. Then, the process determines whether to edit further based on an entry by the operator (S110). If editing is to be continued (YES at S110), the process returns to S106.

If the editing is completed (NO at S110), the process stores, in the RAM 12, data of the label created by the above processing (S111). Then, the process determines whether label creating processing is completed for all of the programs selected as a target for which a label is to be created (S112). If label creating processing is not completed for all of the programs (NO at S112), the process shifts to the next program as a target for label creation in order to perform the label creating processing for this next program (S113) and returns to S101. If label creation is completed for all of the programs (YES at S112), the process returns to the data manipulating/editing processing of FIG. 6.

If a label is to be created without using a template (NO at S101), first the process prompts the operator to select a size of a label he wishes to create and accepts an entry (S114). Further, if a label is to be created by using a long sheet-shaped tape, a width of a desired tape may be determined in place of a label size. If a label size is selected, the process displays on the screen a label image having a selected width together with contents of the EPG information of the currently selected program (S115). Then, the process accepts drag-and-drop of contents (items) of the information of the target program and positions them at a drop point (S116).

Then, the process accepts an entry by the operator for editing of the arranged label (S106). The process repeatedly accepts an entry (S106) until the editing is completed (NO at S107). If the editing is completed (YES at S107), the process determines whether to register the template so that modification information, arrangement information, etc. of a result of the editing can be used as a print format from the next printing onward (S108). A query can be made about whether to perform template registration by such a method as preparing an entry-adapted dialog box so that the operator can select it arbitrarily.

If the template is to be registered (YES at S108), the process registers the current state as the template by storing it in the template storing area 16 (S109). If the template is not to be registered (NO at S108), the process goes directly to S110. Then, the process determines whether to edit further based on an entry by the operator (S110). If editing is to be continued (YES at S110), the process returns to S106.

If the editing is completed (NO at S110), the process stores, in the RAM 12, data of the label created by the above processing (S111). Then, the process determines whether the label creating processing is completed for all of the programs selected as a target for which a label is to be created (S112). If label creating processing is not completed for all of the programs (NO at S112), the process shifts to the next program as a target for label creation in order to perform the label creating processing for this next program (S113) and returns to S101. If label creation is completed for all of the programs (YES at S112), the process returns to the data manipulating/editing processing of FIG. 6.

As described above, by the label creating apparatus 1 of the present embodiment, EPG data is received and then stored in the EPG information DB 15 at the time of video-recording programming and, at the time of actual video-recording, the relevant video-recorded data and the EPG information in the EPG information DB 15 are associated with each other. To create a label for a desired broadcast program video-recorded, it is possible to search the EPG information DB 15 for EPG information associated with that video-recorded program and receive the relevant data so that the label may be created on the basis of this data. Further, to create labels at a time for a plurality of broadcast programs of a series such as a serial drama, it is possible to create these labels by using a template suitable for the program series without arranging common data in a duplicated manner. It is further possible to create a label by arbitrarily arranging desired items of EPG information on a tape even without using a template. Furthermore, a label created in such a manner can be registered as a template so that it can be used from the next time onward.

## Claims

1. A label creating apparatus comprising:
a receiving device (51) that receives program information, which is information relating to broadcast programs;
a program information storing device (15) that stores the program information received by the receiving device;
a video-recording device (32) that video-records the broadcast programs;
a controller (10) that:
associates, with each other, the video-recorded information of the broadcast program video-recorded by the video-recording device (32) and the program information of the broadcast program stored in the program information storing device (15);
searches the program information stored in the program information storing device (15) for such program information as to have been associated with the video-recorded information;
specifies the broadcast program for which a label is to be created, from among the broadcast programs that correspond to the program information stored in the program information storing device (15); and
receives the program information about the specified broadcast program from the program information storing device (15); and
a label creating device (61, 62) that creates the label by arranging the program information received by the controller (10) in a print region,
in which if the program information associated with the video-recorded information is found, the controller (10) specifies the broadcast information for which a label is to be created, from among the broadcast programs that correspond to the associated program information.

2. The label creating apparatus according to claim 1, in which:
the program information is comprised of a plurality of items including at least a title of the program information; and
the label creating device (61, 62) creates a label by arranging information of at least some of the items of the program information into a print region.

3. The label creating apparatus according to claim 1 or 2, in which the controller detects whether a video-recording medium in which broadcast programs are video-recorded is provided and, if the video-recording medium is detected, searches for program information associated with video-recorded information that is video-recorded in the video-recording medium.

4. The label creating apparatus according to claim 3, in which the controller (10) records, in a video-recording medium, video-recorded information of a broadcast program video-recorded by the video-recording device and program information associated with the video-recorded information and, if the video-recording medium is detected, prior to searching the program information storing device, searches the program information recorded in the video-recording medium for the program information associated with the video-recorded information.

5. The label creating apparatus according to one of claims 1 to 4, in which the controller (10):
if program information associated with the video-recorded information is not found, cross-checks the video-recorded information and program information stored in the program information storing device (15) with each other;
extracts program information determined to correspond to the video-recorded information; and
specifies a broadcast program for which a label is to be created, from among the broadcast programs that correspond to the extracted program information.

6. The label creating apparatus according to one of claims 1 to 5, in which the controller:
programs video-recording of a broadcast program by the video-recording device; and
specifies the programmed broadcast program as a broadcast program for which a label is to be created.

7. The label creating apparatus according to one of claims 1 to 6, comprising a template storing device (16) that stores a template, which is a print format including arrangement information required to arrange the program information in a print region of a label and modification information of the arranged program information, in which:
the controller (10):
selects a template to be used from among a plurality of templates stored in the template storing device (16); and
determines whether a plurality of specified broadcast programs constitutes a program series;
the template storing device (16) includes a program series-adapted template;
the controller (10) selects the program series-adapted template if the broadcast programs are determined to constitute a program series; and
if the program series-adapted template is selected by the controller (10), the label creating device (61, 62) arranges program information about the plurality of broadcast programs in the print region according to the program series-adapted template.

8. The label creating apparatus according to claim 7, in which:
the controller (10):
extracts common information, which is program information common to all of a plurality of broadcast programs determined to constitute a program series, from program information of the plurality of broadcast programs; and
extracts unique information, which is program information unique to each of the broadcast programs except the extracted common information;
the program series-adapted template includes a common information objet to insert the common information therein and a unique information object to insert the unique information therein; and
the label creating device (61, 62) arranges the common information extracted by the controller (10) into the common information object and the unique information for each of the broadcast programs into the unique information object according to the program series-adapted template.

9. The label creating apparatus according to claim 7 or 8, in which:
the controller extracts information about an item, if any, that has partially common information from program information about a plurality of broadcast programs determined to constitute a program series;
the program series-adapted template includes a partially common information object to insert therein partially common information, which is information extracted by the controller (10); and
the label creating device (61, 62) arranges the partially common information extracted by the controller (10) into the partially common information object according to the program series-adapted template and avoids arranging the remaining information about the item whose partially common information has been extracted by the controller (10).

10. The label creating apparatus according to one of claims 7 to 9, in which the controller (10):
edits a label created by the label creating device (61, 62); and
registers a print format including arrangement information and modification information of the edited label in the template storing device (16) as a template.

11. A label creating program stored in a computer-readable recording medium, the program comprising:
a receiving step of receiving program information, which is information relating to broadcast programs;
a program information storing step of storing the program information received in the receiving step;
a video-recording step of video-recording the broadcast programs;
an associating step of associating, with each other, the video-recorded information of the broadcast program video-recorded in the video-recording step and the program information of the broadcast program stored in the program information storing step;
a searching step of searching the program information stored in the program information storing step for such program information as to have been associated with the video-recorded information;
a program specifying step of specifying the broadcast program for which a label is to be created, from among the broadcast programs that correspond to the program information stored in the program information storing step;
a program information receiving step of receiving the program information about the broadcast program specified in the program specifying step, from the program information stored in the program information storing step; and
a label creating step of creating the label by arranging the program information received in the program information receiving step in a print region,
in which if the program information associated with the video-recorded information is found in the searching step, the program specifying step specifies a broadcast program for which a label is to be created, from among the broadcast programs that correspond to the associated program information.

12. The label creating program according to claim 11, in which:
the program information is comprised of a plurality of items including at least a title of the program information; and
the label creating step creates a label by arranging information of at least some of the items of the program information into a print region.

13. The label creating program according to claim 11 or 12, comprising a detecting step of detecting whether a video-recording medium in which broadcast programs are video-recorded is provided, in which if the video-recording medium is detected in the detecting step, the searching step searches for program information associated with video-recorded information that is video-recorded in the video-recording medium.

14. The label creating program according to claim 13, comprising a medium recording step of recording, in a video-recording medium, video-recorded information of a broadcast program video-recorded in the video-recording step and program information associated with the video-recorded information in the associating step, in which if the video-recording medium is detected in the detecting step, prior to searching the program information storing step, the searching step searches the program information recorded in the video-recording medium for the program information associated with the video-recorded information.

15. The label creating program according to one of claims 11 to 14, comprising:
a cross-checking step of, if program information associated with the video-recorded information is not found in the searching step, cross-checking the video-recorded information and program information stored in the program information storing step with each other; and
an extracting step of extracting program information determined in the cross-checking step to correspond to the video-recorded information,
in which the program specifying step specifies a broadcast program for which a label is to be created, from among the broadcast programs that correspond to the program information extracted in the extracting step.

16. The label creating program according to one of claims 11 to 15, comprising a video-recording programming step of programming video-recording of a broadcast program in the video-recording step, in which the program specifying step specifies the broadcast program programmed in the video-recording programming step as a broadcast program for which a label is to be created.

17. The label creating program according to one of claims 11 to 16, comprising:
a template selecting step of selecting a template to be used from among a plurality of templates, which is a print format including arrangement information required to arrange the program information in a print region of a label and modification information of the arranged program information; and
a program series determining step of determining whether a plurality of broadcast programs specified by the program specifying step constitutes a program series, in which:
the template selecting step selects a program series-adapted template if the broadcast programs are determined in the program series determining step to constitute a program series; and
if the program series-adapted template is selected in the template selecting step, the label creating step arranges program information about the plurality of broadcast programs in the print region according to the program series-adapted template.

18. The label creating program according to claim 17, comprising:
a common information extracting step of extracting common information, which is program information common to all of a plurality of broadcast programs determined in the program series determining step to constitute a program series, from program information of the plurality of broadcast programs; and
a unique information extracting step of extracting unique information, which is program information unique to each of the broadcast programs except the common information extracted in the common information extracting step, in which:
the program series-adapted template includes a common information object to insert the common information therein and a unique information object to insert the unique information therein; and
the label creating step arranges the common information extracted in the common information extracting step into the common information object and the unique information for each of the broadcast programs into the unique information object according to the program series-adapted template.

19. The label creating program according to claim 17 or 18, comprising a partially common information extracting step of extracting information about an item, if any, that has partially common information from program information about a plurality of broadcast programs determined in the program series determining step to constitute a program series, in which:
the program series-adapted template includes a partially common information object to insert therein partially common information, which is information extracted in the partially common information extracting step; and
the label creating step arranges the partially common information extracted in the partially common information extracting step into the partially common information object according to the program series-adapted template and avoids arranging the remaining information about the item whose partially common information has been extracted in the partially common information extracting step.

20. The label creating program according to one of claims 17 to 19, comprising:
an editing step of editing a label created in the label creating step; and
a template registering step of registering a print format including arrangement information and modification information of the label edited in the editing step as a template.

## Patentansprüche

1. Etikettenerzeugungsgerät mit:
einer empfangenden Vorrichtung (51), die Programminformation empfängt, die Information ist, die sich auf Sendeprogramme bezieht;
einer Programminformations-Speichervorrichtung (15), die die Programminformation speichert, die von der empfangenden Einrichtung empfangen ist;
einer Videoaufzeichnungsvorrichtung (32), die die Sendeprogramme videoaufzeichnet;
einer Steuerung (10), die miteinander die videoaufgezeichnete Information des Sendeprogramms, die von der Videoaufzeichnungsvorrichtung (32) videoaufgezeichnet ist, und die Programminformation des Sendeprogramms, die in der Programminformations-Speichervorrichtung (15) gespeichert ist, verknüpft;
die Programminformation, die in der Programminformations-Speichervorrichtung (15) gespeichert ist, nach solcher Programminformation durchsucht, die mit der videoaufgezeichneten Information verknüpft worden ist;
das Sendeprogramm, für das ein Etikett zu erzeugen ist, aus den Sendeprogrammen spezifiziert, die der Programminformation entsprechen, die in der Programminformations-Speichervorrichtung (15) gespeichert ist; und
die Programminformation über das spezifizierte Sendeprogramm von der Programminformations-Speichervorrichtung (15) empfängt; und
einer Etikettenerzeugungsvorrichtung (61, 62), die das Etikett durch Anordnen der Programminformation, die von der Steuerung (10) empfangen ist, in einem Druckbereich erzeugt;
bei dem, wenn die Programminformation, die mit der videoaufgezeichneten Information verknüpft ist, gefunden wird, die Steuerung (10) die Sendeinformation, für die ein Etikett zu erzeugen ist, aus den Sendeprogrammen spezifiziert, die der verknüpften Programminformation entsprechen.

2. Etikettenerzeugungsgerät nach Anspruch 1, bei dem:
die Programminformation aus einer Mehrzahl von Punkten zusammengesetzt ist, die mindestens einen Titel der Programminformation enthalten; und
die Etikettenerzeugungsvorrichtung (61, 62) ein Etikett durch Anordnen von Information von mindestens einem der Punkte der Programminformation in einen Druckbereich erzeugt.

3. Etikettenerzeugungsgerät nach Anspruch 1 oder 2, bei dem die Steuerung erfaßt, ob ein videoaufgezeichnetes Medium, in dem Sendeprogramme videoaufgezeichnet sind, vorgesehen ist, und wenn das videoaufgezeichnete Medium erfaßt wird, nach Programminformation sucht, die mit der videoaufgezeichneten Information verknüpft ist, die in dem videoaufgezeichneten Medium videoaufgezeichnet ist.

4. Etikettenerzeugungsgerät nach Anspruch 3, bei dem die Steuerung (10) in einem Videoaufzeichnungsmedium videoaufgezeichnete Information eines Sendeprogramms, das durch die Videoaufzeichnungsvorrichtung videoaufgezeichnet ist, und Programminformation, die mit der videoaufgezeichneten Information verknüpft ist, aufzeichnet und, wenn das Videoaufzeichnungsmedium erfaßt wird, vor dem Durchsuchen der Programminformations-Speichervorrichtung die Programminformation, die in dem Videoaufzeichnungsmedium aufgezeichnet ist, nach Programminformation, die mit der videoaufgezeichneten Information verknüpft ist, durchsucht.

5. Etikettenerzeugungsgerät nach einem der Ansprüche 1 bis 4, bei dem die Steuerung (10):
wenn Programminformation, die mit der videoaufgezeichneten Information verknüpft ist, nicht gefunden wird, die videoaufgezeichnete Information und Programminformation, die in der Programminformations-Speichervorrichtung (15) gespeichert sind, gegenseitig überprüft;
Programminformation extrahiert, die bestimmt ist, der videoaufgezeichneten Information zu entsprechen; und
ein Sendeprogramm spezifiziert, für das ein Etikett zu erzeugen ist, aus den Sendeprogrammen, die der extrahierten Programminformation entsprechen.

6. Etikettenerzeugungsgerät nach einem der Ansprüche 1 bis 5, bei dem die Steuerung:
Videoaufzeichnen eines Sendeprogramms durch die Videoaufzeichnungsvorrichtung programmiert; und
das programmierte Sendeprogramm als ein Sendeprogramm spezifiziert, für das ein Etikett zu erzeugen ist.

7. Etikettenerzeugungsgerät nach einem der Ansprüche 1 bis 6, mit einer Musterspeichervorrichtung (16), die ein Muster, das ein Druckformat ist, das Anordnungsinformation enthält, die zum Anordnen der Programminformation in einem Druckbereich eines Etiketts benötigt wird, und Modifikationsinformation der angeordneten Programminformation speichert, bei dem:
die Steuerung (10):
ein Muster auswählt, das zu benutzen ist, aus einer Mehrzahl von Mustern, die in der Musterspeichervorrichtung (16) gespeichert sind; und
bestimmt, ob eine Mehrzahl von spezifizierten Sendeprogrammen eine Programmserie darstellt;
die Musterspeichervorrichtung (16) ein programmserien-angepasstes Muster enthält;
die Steuerung (10) das programmserien-angepasste Muster auswählt, wenn die Sendeprogramme als eine Programmserie darstellend bestimmt sind; und
wenn das programmserien-angepasste Muster durch die Steuerung (10) ausgewählt wird, die Etikettenerzeugungsvorrichtung (61, 62) Programminformation über die Mehrzahl von Sendeprogrammen in dem Druckbereich gemäß dem programmserien-angepassten Muster anordnet.

8. Etikettenerzeugungsgerät nach Anspruch 7, bei dem:
die Steuerung (10):
gemeinsame Information, die Programminformation gemeinsam für all die Mehrzahl von Sendeprogrammen ist, die als eine Programmserie darstellend bestimmt sind, aus Programminformation der Mehrzahl von Sendeprogrammen extrahiert; und
einzelne Information extrahiert, die Programminformation ist, die für jedes der Sendeprogramme einzigartig ist, mit Ausnahme der extrahierten gemeinsamen Information;
das programmserien-angepasste Muster ein gemeinsames Informationsobjekt enthält zum Einfügen der gemeinsamen Information da hinein und ein einzigartiges Informationsobjekt zum Einfügen der einzigartigen Information da hinein; und
die Etikettenerzeugungsvorrichtung (61, 62) die gemeinsame Information, die von der Steuerung (10) extrahiert ist, in das gemeinsame Informationsobjekt und die einzigartige Information für jedes der Sendeprogramme in das einzigartige Informationsobjekt gemäß dem programmserien-angepassten Muster anordnet.

9. Etikettenerzeugungsgerät nach Anspruch 7 oder 8, bei dem:
die Steuerung Information über einen Punkt extrahiert, wenn überhaupt, der teilweise gemeinsame Information aufweist, aus Programminformation über einer Mehrzahl von Sendeprogrammen, die zum Darstellen einer Programmserie bestimmt sind; und
das programmserien-angepasste Muster ein teilweise gemeinsames Informationsobjekt enthält, zum Einfügen da hinein von teilweiser gemeinsamer Information, die Information ist, die von der Steuerung (10) extrahiert ist; und
die Etikettenerzeugungsvorrichtung (61, 62) die teilweise gemeinsame Information, die von der Steuerung (10) extrahiert ist, in das teilweise gemeinsame Informationsobjekt gemäß dem programmserien-angepassten Muster anordnet und Anordnen der verbleibenden Information über den Punkt, dessen teilweise gemeinsame Information durch die Steuerung (10) extrahiert worden ist, vermeidet.

10. Etikettenerzeugungsgerät nach einem der Ansprüche 7 bis 9, bei dem die Steuerung (10):
ein Etikett bearbeitet, das durch die Etikettenerzeugungsvorrichtung (61, 62) erzeugt ist; und
ein Druckformat, das Anordnungsinformation und Modifikationsinformation des bearbeiteten Etiketts enthält, in der Musterspeichervorrichtung (16) als ein Muster registriert.

11. Etikettenerzeugungsprogramm, das auf einem computerlesbaren Aufzeichnungsmedium gespeichert ist, wobei das Programm aufweist:
einen Empfangsschritt des Empfangens von Programminformation, die Information ist, die sich auf Sendeprogramme bezieht;
einen Programminformations-Speicherschritt des Speicherns der Programminformation, die in dem Empfangsschritt empfangen ist;
einen Videoaufzeichnungsschritt des Videoaufzeichnens der Sendeprogramme;
einen Verknüpfungsschritt des Verknüpfens miteinander der videoaufgezeichneten Information des Sendeprogramms, das in dem Videoaufzeichnungsschritt aufgezeichnet ist, und der Programminformation des Sendeprogramms, das in dem Programminformationsspeicherschritt gespeichert ist;
einen Suchschritt des Durchsuchens der Programminformation, die in dem Programminformationsspeicherschritt gespeichert ist, nach solcher Programminformation, die mit der videoaufgezeichneten Information verknüpft worden ist;
einen Programmspezifizierungsschritt des Spezifizierens des Sendeprogramms, für das ein Etikett zu erzeugen ist, aus den Sendeprogrammen, die der Programminformation entsprechen, die in dem Programminformations-Speicherschritt gespeichert sind;
einen Programminformations-Empfangsschritt des Empfangens der Programminformation über das Sendeprogramm, das in dem Programmspezifizierungsschritt spezifiziert ist, aus der Programminformation, die in dem Programminformations-Speicherschritt gespeichert ist; und
einen Etikettenerzeugungsschritt des Erzeugens des Etiketts durch Anordnen der Programminformation, die in dem Programminformations-Empfangsschritt empfangen ist, in einem Druckbereich,
bei dem, wenn die Programminformation, die mit der videoaufgezeichneten Information verknüpft ist, in dem Suchschritt gefunden wird, der Programmspezifizierungsschritt ein Sendeprogramm spezifiziert, für das ein Etikett zu erzeugen ist, aus den Sendeprogrammen, die der verknüpften Programminformation entsprechen.

12. Etikettenerzeugungsprogramm nach Anspruch 11, bei dem:
die Programminformation aus einer Mehrzahl von Punkten zusammengesetzt ist, die mindestens einen Titel der Programminformation enthalten; und
der Etikettenerzeugungsschritt ein Etikett durch Anordnen von Information von mindestens einem der Punkte der Programminformation in einen Druckbereich erzeugt.

13. Etikettenerzeugungsprogramm nach Anspruch 11 oder 12, mit einem Erfassungsschritt des Erfassens, ob ein Videoaufzeichnungsmedium, in dem Sendeprogramme videoaufgezeichnet sind, vorgesehen ist, bei dem, wenn das Videoaufzeichnungsmedium in dem Aufzeichnungsschritt erfaßt wird, der Suchschritt nach Programminformation sucht, die mit der videoaufgezeichneten Information verknüpft ist, die in dem Videoaufzeichnungsmedium videoaufgezeichnet ist.

14. Etikettenerzeugungsprogramm nach Anspruch 13, mit einem Mediumaufzeichnungsschritt des Aufzeichnens in einem Videoaufzeichnungsmedium von videoaufgezeichneter Information eines Sendeprogramms, das in dem Videoaufzeichnungsschritt aufgezeichnet ist, und von Programminformation, die mit der videoaufgezeichneten Information in dem Verknüpfungsschritt verknüpft ist, bei dem, wenn das Videoaufzeichnungsmedium in dem Erfassungsschritt erfaßt wird, vor dem Durchsuchen des Programminformationsspeicherschritts der Suchschritt die Programminformation sucht, die in dem Videoaufzeichnungsmedium aufgezeichnet ist, nach der Programminformation, die mit der videoaufgezeichneten Information verknüpft ist.

15. Etikettenerzeugungsprogramm nach einem der Ansprüche 11 bis 14, mit:
einem Überprüfungsschritt des, wenn Programminformation, die mit der videoaufgezeichneten Information verknüpft ist, nicht in dem Suchschritt gefunden wird, gegenseitigen Überprüfens der videoaufgezeichneten Information und der Programminformation, die in dem Programminformationsspeicherschritt gespeichert sind; und
einem Extrahierungsschritt des Extrahierens von Programminformation, die in dem Überprüfungsschritt bestimmt ist, als der videoaufgezeichneten Information zu entsprechen, bei dem der Programmspezifizierungsschritt ein Sendeprogramm spezifiziert, für das ein Etikett zu erzeugen ist, aus den Sendeprogrammen, die der Programminformation entsprechen, die in dem Extrahierungsschritt extrahiert ist.

16. Etikettenerzeugungsprogramm nach einem der Ansprüche 11 bis 15, mit einem Videoaufzeichnungs-Programmierungsschritt des Programmierens von Videoaufzeichnen eines Sendeprogramms in dem Videoaufzeichnungsschritt, bei dem der Programmspezifizierungsschritt das Sendeprogramm spezifiziert, das in dem Videoaufzeichnungs-Programmierungsschritt programmiert ist, als ein Sendeprogramm, für das ein Etikett zu erzeugen ist.

17. Etikettenerzeugungsprogramm nach einem der Ansprüche 11 bis 16, mit:
einem Musterauswahlschritt des Auswählens eines Musters, das zu benutzen ist, aus einer Mehrzahl von Mustern, das ein Druckformat ist, das Anordnungsinformation, die zum Anordnen der Programminformation in einem Druckbereich eines Etiketts benötigt wird, und Modifikationsinformation der angeordneten Programminformation enthält; und
ein Programmserien-Bestimmungsschritt des Bestimmens, ob eine Mehrzahl von Sendeprogrammen, die durch den Programmspezifizierungsschritt spezifiziert sind, eine Programmserie darstellt, bei dem:
der Musterauswahlschritt ein programmserien-angepasstes Muster auswählt, wenn die Sendeprogramme in dem Programmserien-Bestimmungsschritt als eine Programmserie darstellend bestimmt sind; und
wenn das programmserien-angepasste Muster in dem Musterauswahlschritt ausgewählt ist, der Etikettenerzeugungsschritt Programminformation über die Mehrzahl von Sendeprogrammen in dem Druckbereich anordnet gemäß dem programmserien-angepassten Muster.

18. Etikettenerzeugungsprogramm nach Anspruch 17, mit:
einem Extrahierungsschritt gemeinsamer Information des Extrahierens gemeinsamer Information, die Programminformation ist, die für alle einer Mehrzahl von Sendeprogrammen gemeinsam ist, die in dem Programmserienbestimmungsschritt bestimmt sind, zum Darstellen einer Programmserie aus Programminformation der Mehrzahl von Sendeprogrammen; und
einem Extrahierungsschritt einer einzigartigen Information des Extrahierens einer einzigartigen Information, die eine Programminformation ist, die für jedes der Sendeprogramme einzigartig ist, mit Ausnahme der gemeinsamen Information, die in dem Extrahierungsschritt der gemeinsamen Information extrahiert ist, bei dem:
das programmserien-angepasste Muster ein gemeinsames Informationsobjekt enthält, das in die gemeinsame Information einzufügen ist, und ein einzigartiges Informationsobjekt zum Einführen der einzigartigen Information da hinein; und der Etikettenerzeugungsschritt die gemeinsame Information,
die in dem Extrahierungsschritt der gemeinsamen Information extrahiert ist, in das gemeinsame Informationsobjekt und die einzigartige Information für jedes der Sendeprogramme in das einzigartige Informationsobjekt anordnet gemäß dem programmserien-angepassten Muster.

19. Etikettenerzeugungsprogramm nach Anspruch 17 oder 18, mit einem Extrahierungsschritt einer teilweise gemeinsamen Information des Extrahierens von Information über einen Punkt, wenn überhaupt, der teilweise gemeinsame Information aufweist, aus Programminformation über eine Mehrzahl von Sendeprogrammen, die in dem Programmserienbestimmungsschritt bestimmt sind als eine Programmserie darstellend, bei dem:
der Etikettenanordnungsschritt die teilweise gemeinsame Information, die in dem Extrahierungsschritt der teilweise gemeinsamen Information extrahiert ist, in das teilweise gemeinsame Informationsobjekt gemäß dem programmserien-angepassten Muster anordnet und Anordnen der verbleibenden Information über den Punkt vermeidet, dessen teilweise gemeinsame Information in dem Extrahierungsschritt der teilweise gemeinsamen Information extrahiert worden ist.

20. Etikettenerzeugungsprogramm nach einem der Ansprüche 17 bis 19, mit:
einem Bearbeitungsschritt des Bearbeitens eines Etiketts, das in dem Etikettenerzeugungsschritt erzeugt ist; und
einem Musterregistrierungsschritt des Registrierens eines Druckformats, das Anordnungsinformation und Modifikationsinformation des Etiketts enthält, das in dem Bearbeitungsschritt bearbeitet ist, als ein Muster.

## Revendications

1. Appareil de création d'étiquette comprenant :
un dispositif de réception (51) qui reçoit des informations de programme, qui sont des informations concernant des programmes diffusés ;
un dispositif de mémorisation d'informations de programme (15) qui mémorise les informations de programme reçues par le dispositif de réception ;
un dispositif d'enregistrement vidéo (32) qui enregistre la vidéo des programmes diffusés ;
un contrôleur (10) qui :
associe, les unes aux autres, les informations de vidéo enregistrée du programme diffusé dont la vidéo a été enregistrée par le dispositif d'enregistrement vidéo (32) et les informations de programme du programme diffusé mémorisées dans le dispositif de mémorisation d'informations de programme (15) ;
recherche dans les informations de programme mémorisées dans le dispositif de mémorisation d'informations de programme (15) des informations de programme qui ont été associées aux informations de vidéo enregistrée ;
spécifie le programme diffusé pour lequel une étiquette doit être créée, parmi les programmes diffusés qui correspondent aux informations de programme mémorisées dans le dispositif de mémorisation d'informations de programme (15) ; et
reçoit les informations de programme concernant le programme diffusé spécifié du dispositif de mémorisation d'informations de programme (15) ; et
un dispositif de création d'étiquette (61, 62) qui crée l'étiquette en agençant les informations de programme reçues par le contrôleur (10) dans une région d'impression,
dans lequel, si les informations de programme associées aux informations de vidéo enregistrée sont trouvées, le contrôleur (10) spécifie les informations de diffusion pour lesquelles une étiquette doit être créée, parmi les programmes diffusés qui correspondent aux informations de programme associées.

2. Appareil de création d'étiquette selon la revendication 1, dans lequel :
les informations de programme sont composées d'une pluralité d'éléments comprenant au moins un titre des informations de programme ; et
le dispositif de création d'étiquette (61, 62) crée une étiquette en agençant les informations d'au moins certains des éléments des informations de programme dans une région d'impression.

3. Appareil de création d'étiquette selon la revendication 1 ou 2, dans lequel le contrôleur détecte si un support d'enregistrement vidéo sur lequel les vidéos de programmes diffusés sont enregistrées est fourni et, si le support d'enregistrement vidéo est détecté, recherche des informations de programme associées à des informations de vidéo enregistrée dont la vidéo est enregistrée sur le support d'enregistrement vidéo.

4. Appareil de création d'étiquette selon la revendication 3, dans lequel le contrôleur (10) enregistre, sur un support d'enregistrement vidéo, les informations de vidéo enregistrée d'un programme diffusé dont la vidéo a été enregistrée par le dispositif d'enregistrement vidéo et des informations de programme associées aux informations de vidéo enregistrée et, si le support d'enregistrement vidéo est détecté, avant la recherche dans le dispositif de mémorisation d'informations de programme, recherche dans les informations de programme enregistrées sur le support d'enregistrement vidéo des informations de programme associées aux informations de vidéo enregistrée.

5. Appareil de création d'étiquette selon l'une des revendications 1 à 4, dans lequel le contrôleur (10) :
si des informations de programme associées aux informations de vidéo enregistrée ne sont pas trouvées, vérifie par recoupement les informations de vidéo enregistrée et les informations de programme mémorisées dans le dispositif de mémorisation d'informations de programme (15) les unes avec les autres ;
extrait les informations de programme déterminées comme correspondant aux informations de vidéo enregistrée ; et
spécifie un programme diffusé pour lequel une étiquette doit être créée, parmi les programmes diffusés qui correspondent aux informations de programme extraites.

6. Appareil de création d'étiquette selon l'une des revendications 1 à 5, dans lequel le contrôleur :
programme l'enregistrement vidéo d'un programme diffusé par le dispositif d'enregistrement vidéo ; et
spécifie le programme diffusé programmé en tant que programme diffusé pour lequel une étiquette doit être créée.

7. Appareil de création d'étiquette selon l'une des revendications 1 à 6, comprenant un dispositif de mémorisation de modèle (16) qui mémorise un modèle, qui est un format d'impression comprenant des informations d'agencement nécessaires pour agencer les informations de programme dans une région d'impression d'une étiquette et des informations de modification des informations de programme agencées, dans lequel :
le contrôleur (10) :
sélectionne un modèle à utiliser parmi une pluralité de modèles mémorisés dans le dispositif de mémorisation de modèle (16) ; et
détermine si une pluralité de programmes diffusés spécifiés constituent une série de programmes ;
le dispositif de mémorisation de modèle (16) comprend un modèle adapté à une série de programmes ;
le contrôleur (10) sélectionne le modèle adapté à une série de programmes s'il est déterminé que les programmes diffusés constituent une série de programmes ; et
si le modèle adapté à une série de programmes est sélectionné par le contrôleur (10), le dispositif de création d'étiquette (61, 62) agence des informations de programme concernant la pluralité de programmes diffusés dans la région d'impression conformément au modèle adapté à une série de programmes.

8. Appareil de création d'étiquette selon la revendication 7, dans lequel :
le contrôleur (10) :
extrait des informations communes, qui sont des informations de programme communes à la totalité d'une pluralité de programmes diffusés déterminés comme constituant une série de programmes, des informations de programme de la pluralité de programmes diffusés ; et
extrait des informations propres, qui sont des informations de programme propres à chacun des programmes diffusés à l'exception des informations communes extraites ;
le modèle adapté à une série de programmes comprend un objet d'informations communes pour insérer les informations communes dans celui-ci et un objet d'informations propres pour insérer les informations propres dans celui-ci ; et
le dispositif de création d'étiquette (61, 62) agence les informations communes extraites par le contrôleur (10) dans l'objet d'informations communes et les informations propres pour chacun des programmes diffusés dans l'objet d'informations propres conformément au modèle adapté à une série de programmes.

9. Appareil de création d'étiquette selon la revendication 7 ou 8, dans lequel :
le contrôleur extrait des informations concernant un élément, le cas échéant, qui comporte des informations partiellement communes, des informations de programme concernant une pluralité de programmes diffusés déterminés comme constituant une série de programmes ;
le modèle adapté à une série de programmes comprend un objet d'informations partiellement communes pour insérer dans celui-ci les informations partiellement communes, qui sont extraites par le contrôleur (10) ; et
le dispositif de création d'étiquette (61, 62) agence les informations partiellement communes extraites par le contrôleur (10) dans l'objet d'informations partiellement communes conformément au modèle adapté à une série de programmes et évite d'agencer les informations restantes concernant l'élément dont les informations partiellement communes ont été extraites par le contrôleur (10).

10. Appareil de création d'étiquette selon l'une des revendications 7 à 9, dans lequel le contrôleur (10) :
édite une étiquette créée par le dispositif de création d'étiquette (61, 62) ; et
enregistre un format d'impression comprenant des informations d'agencement et des informations de modification de l'étiquette éditée dans le dispositif de mémorisation de modèle (16) en tant que modèle.

11. Programme de création d'étiquette mémorisé sur un support d'enregistrement pouvant être lu par ordinateur, le programme comprenant :
une étape de réception consistant à recevoir des informations de programme, qui sont des informations concernant des programmes diffusés ;
une étape de mémorisation d'informations de programme consistant à mémoriser les informations de programme reçues à l'étape de réception ;
une étape d'enregistrement vidéo consistant à enregistrer la vidéo des programmes diffusés ;
une étape d'association consistant à associer, les unes avec les autres, les informations de vidéo enregistrée du programme diffusé dont la vidéo a été enregistrée à l'étape d'enregistrement vidéo et les informations de programme du programme diffusé mémorisées à l'étape de mémorisation d'informations de programme ;
une étape de recherche consistant à rechercher dans les informations de programme mémorisées à l'étape de mémorisation d'informations de programme des informations de programme associées aux informations de vidéo enregistrée ;
une étape de spécification de programme consistant à spécifier le programme diffusé pour lequel une étiquette doit être créée, parmi les programmes diffusés qui correspondent aux informations de programme mémorisées à l'étape de mémorisation d'informations de programme ;
une étape de réception d'informations de programme consistant à recevoir les informations de programme concernant le programme diffusé spécifié à l'étape de spécification de programme, parmi les informations de programme mémorisées à l'étape de mémorisation d'informations de programme ; et
une étape de création d'étiquette consistant à créer l'étiquette en agençant les informations de programme reçues à l'étape de réception d'informations de programme dans une région d'impression,
dans lequel, si les informations de programme associées aux informations de vidéo enregistrée sont trouvées à l'étape de recherche, l'étape de spécification de programme spécifie un programme diffusé pour lequel une étiquette doit être créée, parmi les programmes diffusés qui correspondent aux informations de programme associées.

12. Programme de création d'étiquette selon la revendication 11, dans lequel :
les informations de programme sont composées d'une pluralité d'éléments comprenant au moins un titre des informations de programme ; et
l'étape de création d'étiquette crée une étiquette en agençant les informations d'au moins certains des éléments des informations de programme dans une région d'impression.

13. Programme de création d'étiquette selon la revendication 11 ou 12, comprenant une étape de détection consistant à détecter si un support d'enregistrement vidéo sur lequel les vidéos de programmes diffusés sont enregistrées est fourni, dans lequel, si le support d'enregistrement vidéo est détecté à l'étape de détection, l'étape de recherche recherche des informations de programme associées à des informations de vidéo enregistrée dont la vidéo a été enregistrée sur le support d'enregistrement vidéo.

14. Programme de création d'étiquette selon la revendication 13, comprenant une étape d'enregistrement de support consistant à enregistrer, sur un support d'enregistrement vidéo, les informations de vidéo enregistrée d'un programme diffusé dont la vidéo a été enregistrée à l'étape d'enregistrement vidéo et des informations de programme associées aux informations de vidéo enregistrée à l'étape d'association, dans lequel, si le support d'enregistrement vidéo est détecté à l'étape de détection, avant la recherche de l'étape de mémorisation d'informations de programme, l'étape de recherche recherche dans les informations de programme enregistrées sur le support d'enregistrement vidéo les informations de programme associées aux informations de vidéo enregistrée.

15. Programme de création d'étiquette selon l'une des revendications 11 à 14, comprenant :
une étape de vérification par recoupement consistant à vérifier par recoupement, si des informations de programme associées aux informations de vidéo enregistrée ne sont pas trouvées à l'étape de recherche, les informations de vidéo enregistrée et les informations de programme mémorisées à l'étape de mémorisation d'informations de programme les unes avec les autres ; et
une étape d'extraction consistant à extraire les informations de programme déterminées à l'étape de vérification par recoupement comme correspondant aux informations de vidéo enregistrée,
dans lequel l'étape de spécification de programme spécifie un programme diffusé pour lequel une étiquette doit être créée, parmi les programmes diffusés qui correspondent aux informations de programme extraites à l'étape d'extraction.

16. Programme de création d'étiquette selon l'une des revendications 11 à 15, comprenant une étape de programmation d'enregistrement vidéo consistant à programmer l'enregistrement vidéo d'un programme diffusé à l'étape d'enregistrement vidéo, dans lequel l'étape de spécification de programme spécifie le programme diffusé programmé à l'étape de programmation d'enregistrement vidéo en tant que programme diffusé pour lequel une étiquette doit être créée.

17. Programme de création d'étiquette selon l'une des revendications 11 à 16, comprenant :
une étape de sélection de modèle consistant à sélectionner un modèle à utiliser parmi une pluralité de modèles, qui est un format d'impression comprenant des informations d'agencement nécessaires pour agencer les informations de programme dans une région d'impression d'une étiquette et des informations de modification des informations de programme agencées ; et
une étape de détermination de série de programmes consistant à déterminer si une pluralité de programmes diffusés spécifiés par l'étape de spécification de programme constituent une série de programmes, dans lequel :
l'étape de sélection de modèle sélectionne un modèle adapté à une série de programmes s'il est déterminé à l'étape de détermination de série de programmes que les programmes diffusés constituent une série de programmes ; et
si le modèle adapté à une série de programmes est sélectionné à l'étape de sélection de modèle, l'étape de création d'étiquette agence les informations de programme concernant la pluralité de programmes diffusés dans la région d'impression conformément au modèle adapté à une série de programmes.

18. Programme de création d'étiquette selon la revendication 17, comprenant :
une étape d'extraction d'informations communes consistant à extraire des informations communes, qui sont des informations de programme communes à la totalité d'une pluralité de programmes diffusés déterminés à l'étape de détermination de série de programmes comme constituant une série de programmes, des informations de programme de la pluralité de programmes diffusés ; et
une étape d'extraction d'informations propres consistant à extraire des informations propres, qui sont des informations de programme propres à chacun des programmes diffusés à l'exception des informations communes extraites à l'étape d'extraction d'informations communes, dans lequel :
le modèle adapté à une série de programmes comprend un objet d'informations communes pour insérer les informations communes dans celui-ci et un objet d'informations propres pour insérer les informations propres dans celui-ci ; et
l'étape de création d'étiquette agence les informations communes extraites à l'étape d'extraction d'informations communes dans l'objet d'informations communes et les informations propres pour chacun des programmes diffusés dans l'objet d'informations propres conformément au modèle adapté à une série de programmes.

19. Programme de création d'étiquette selon la revendication 17 ou 18, comprenant une étape d'extraction d'informations partiellement communes consistant à extraire des informations concernant un élément, le cas échéant, qui comporte des informations partiellement communes, des informations de programme concernant une pluralité de programmes diffusés déterminés à l'étape de détermination de série de programmes comme constituant une série de programmes, dans lequel :
le modèle adapté à une série de programmes comprend un objet d'informations partiellement communes pour insérer dans celui-ci des informations partiellement communes, qui sont des informations extraites à l'étape d'extraction d'informations partiellement communes ; et
l'étape de création d'étiquette agence les informations partiellement communes extraites à l'étape d'extraction d'informations partiellement communes dans l'objet d'informations partiellement communes conformément au modèle adapté à une série de programmes et évite d'agencer les informations restantes concernant l'élément dont les informations partiellement communes ont été extraites à l'étape d'extraction d'informations partiellement communes.

20. Programme de création d'étiquette selon l'une des revendications 17 à 19, comprenant :
une étape d'édition consistant à éditer une étiquette créée à l'étape de création d'étiquette ; et
une étape d'enregistrement de modèle consistant à enregistrer un format d'impression comprenant des informations d'agencement et des informations de modification de l'étiquette éditées à l'étape d'édition en tant que modèle.
